# EUROPEAN PATENT APPLICATION

(11) **EP 3 231 694 A1**
(43) Date of publication of application: **18.10.2017**
(21) Application number: 17166722.3
(22) Date of filing: 14.04.2017
(51) Int. Cl.: B62H 3/00, G07F 17/00

(54) **STATION FOR MANAGING A FLEET OF BICYCLES**

(30) Priority: 14.04.2016 IT UA20162610
(71) Applicant: Clear Channel Jolly Pubblicita' S.p.A., 00198 Roma (IT)
(72) Inventor: VERRECCHIA, Sergio, 35010 Limena (IT)
(74) Representative: Bongiovanni, Simone

(57) **Abstract**

Station (1) for managing a fleet of bicycles (5) comprising a first rack unit (7) provided with a plurality of first parking points (7a), each of which is configured to support a respective first bicycle (5a) having a size compatible for an adult user and a rack unit (9) provided with a plurality of second parking points (9a), each of which is configured to support a respective second bicycle (5g) having a smaller size than the first bicycle (5a) and compatible for a child user. It is further provided an electronic control unit (20), which can receive an order for the withdrawal of a bicycle coming from an authorized user to enable the withdrawal of a first adult bicycle and a subsequent withdrawal of a second children's bicycle.

## Description

The present invention relates to a station for managing a fleet of bicycles.

The patent EP 2.315.191 describes a station wherein a parking area provided with a secure entry defines a predetermined number of parking points for bicycles. It is provided with user identification means (e.g. a reading device for a magnetic card or an RFID device), a control unit and means for detecting the presence of a single bicycle in a respective parking point. The control unit is connected to the identification means and to the detection means and further comprises means for assigning to a user a free place, which may vary depending on the vacancies detected by the means for detecting the presence of a single bicycle.

US patent 8,678,205 describes a station wherein each parking station respectively comprises a plurality of parking and locking points to which single bicycles can be fastened. Each parking and locking point comprises two arms defining a space in which the front wheel of the bicycle can be inserted, while the locking means are formed by two mobile side appendixes to be arranged in locking seats.

The aforesaid stations generally allow the withdrawal and the parking of bicycles used by adults who possess login credentials to the station.

The object of the present invention is to allow authorized users to withdraw adult bicycles and children's bicycles, also ensuring that the bicycles are correctly parked at the end of their use.

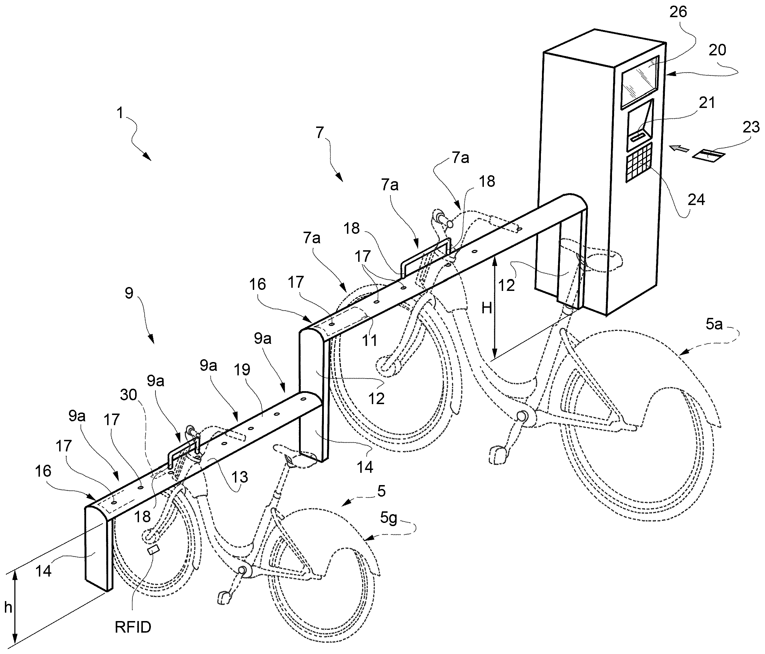

The present invention will now be illustrated with reference to the accompanying drawing showing a preferred embodiment.

In the attached figure, 1 indicates as a whole a station for managing a fleet of bicycles. The station 1 is located within a urban area and allows the parking and the withdrawal of bicycles 5.

The above object is achieved by the present invention since it relates to a station for managing a fleet of bicycles of the type described in claim 1.

According to the present invention, each station 1 comprises:
- a first rack unit 7 provided with a plurality of first parking points 7a, each of which is configured to support a respective first bicycle 5a having a size compatible for an adult user; and
- a second rack unit 9 adjacent to the first rack unit 7 and provided with a plurality of second parking points 9a, each of which is configured to support a respective second bicycle 5g having a size smaller than the first bicycle 5a and compatible for a child user.

For example, the size of children's bicycles can be as follows:
children 2/3 years, height from 80 to 100 cm, recommended size 12"
children 4/5 years, height from 95 to 115 cm, recommended size 16"
children from 6/8 years, height from 115 to 130 cm, recommended size 20"
children from 8/11 years, height from 130 to 145 cm, recommended size 24"

In the illustrated exemplary embodiment (the mechanical structure may be different), the first rack unit 7 comprises a first horizontal bar 11 supported by the upper ends of vertical end elements 12 extending from the parking surface; the first bar 11 is spaced with respect to the parking plane by a first distance H.

The first parking points 7a are evenly spaced along the first horizontal bar 11 to allow parking the first bicycles 5a frontally connected to the bar 11 and substantially parallel to each other.

The second rack unit 9 comprises a second horizontal bar 13 supported by the upper ends of vertical end elements 14 extending from the parking surface; the second bar 13 is spaced with respect to the parking plane by a second distance h smaller than the first distance H. The second parking points 9a are spaced along the second horizontal bar 13 to allow parking the second bicycles 5g frontally connected to the bar 13 and substantially parallel to each other.

Each first parking point 7a is provided with a reversible connecting device 16 (of known type and therefore not described in detail) to provide a mechanical connection between a portion of the first bicycle 5a and the first rack unit 7 when the first bicycle 5a is in a stable parking position.

Conveniently, each parking point 7a comprises a pair of holes 17 made in the first bar 11 housing the connecting device 16; each bicycle 5a has a front portion (e.g. a luggage carrier) provided with a pair of teeth 18 (conveniently, each tooth has an end sphere) to be inserted into the respective holes 17 when the bicycle is in the parking position and is fastened to the bar 11. The connecting device 16 can be arranged in a first locking position to lock the teeth 18 in the respective holes 17 when the bicycle is in a stable parking position. As a result of a remote control, the connecting device 16 can be arranged in a second opening position to allow the exit of the teeth 18 from the respective holes 17 and allow the withdrawal of the bicycle 5a.

Analogously, each parking point 9a comprises a pair of holes 17 made in the second bar 13 housing the connecting device 16; each bicycle 5g has a front portion (e.g. a luggage carrier) provided with a pair of teeth 18 to be inserted into the respective holes 17 when the bicycle is in the parking position and is fastened to the bar 13. The connecting device 16 can be disposed in a first locking position to lock the teeth 18 in the respective holes 17 when the bicycle is in a stable parking position. As a result of a remote control (e.g. of the electric type), the connecting device 16 can be arranged in a second opening position to allow the exit of the teeth 18 from the respective holes 17 and allow the withdrawal of the bicycle 5g.

Sensors (shown below) are provided, which can detect the presence of a bicycle arranged in a first / second parking point 7a/9a in the stable parking position.

It is provided an electronic unit 20 housed in a vertical anti-theft structure (a so-called totem) provided with reading means 21 (e.g. reading means of magnetic cards 23, of RFID cards, of a code inserted by means of keyboard 24) to receive an order for the withdrawal of a bicycle 5, and a display 26 (e.g. of the touch screen type). This order comes from a service-authorized user.

The electronic unit 20, after detecting a valid order, enables the release of a first reversible connecting device 16 belonging to the first rack unit 7 to allow the withdrawal of a first adult bicycle 5a. The user can thus withdraw an adult bicycle taking it out of the parking point 7a where it was parked.

Then, the user can repeat the previously imparted order (e.g. by passing again the card 23 over the reader 21 or by introducing again the code by means of the touch screen 26), so that the electronic unit 20 can enable the unlocking of at least a first reversible connecting device 16 belonging to the second rack unit 9 to allow the withdrawal of a first children's bicycle 5g. The user can thus withdraw a first children's bicycle taking it out of the parking point 9a where it was parked.

The electronic unit 20 could, in response to a further repetition of the order, enable the release of a further connecting device 16 for withdrawing a second children's bicycle 5g. Preferably, the order for unlocking the children's bicycle can be given up to three times to withdraw up to three children's bicycles 5g.

However, the withdrawal of the adult bicycle 5a is not mandatory to withdraw the children's bicycle 5g that may be taken even without withdrawing the adult bicycle up to a maximum of three simultaneous withdrawals for each user.

Once having finished using the bicycles, they are brought back to a station 2 with free parking points; the adult bicycle 5a is parked in a first parking point 7a by inserting the teeth 18 into the holes 17 so that the connecting device snaps in the first locking position. Analogously, the children's bicycle 5g is parked in a second parking point 9a by inserting the teeth 18 into the holes 17 so that the connecting device snaps in the first locking position.

If the children's bicycle 5g is incorrectly parked in a first parking point 7a, the electronic unit 20 carries out the following operations:
- sending a locking order to the connecting device 16 of the first parking point 7a where the children's bicycle 5g has been parked, thus preventing any subsequent withdrawal of the incorrectly positioned bicycle 5g. In this way, the user cannot repeat the parking operation of the children's bicycle and no other user can withdraw that bicycle;
- providing by means of the electronic unit 20 (or of a remote unit - not shown) a message (e.g. SMS, push notification, web notification) to warn the user about the incorrect parking of the children's bicycle 5g;
- notifying the error to a remote operating centre (not shown - the remote operating centre is telematically in contact with the various totems); the operating centre plans the intervention of some operator to reposition the incorrectly parked bicycle (this service does not require permanent staff in the various stations).

Analogous operations can be carried out if an adult bicycle has been parked in a position 9a of the rack unit 9.

In particular, where the adult bicycle 5a has been incorrectly parked in a second parking point 9a, the electronic unit 20 carries out the following operations:
- sending a locking order to the connecting device 16 of the second parking point 9a where the adult bicycle 5a has been parked, thus preventing any subsequent withdrawal of the incorrectly positioned bicycle 5a. In this way, the user cannot repeat the parking operation of the adult bicycle and no other user can withdraw that bicycle;
- providing by means of the electronic unit 20 (or of a remote unit - not shown) a message (e.g. SMS, push notification, web notification) to warn the user about the incorrect parking of the adult bicycle 5a;
- notifying the error to a remote operating centre (not shown - the remote operating centre is telematically in contact with the various totems); the operating centre plans the intervention of some operator to reposition the incorrectly parked bicycle (this service does not require permanent staff in the various stations).

Preferably, each bicycle is provided with a passive RFID unit storing a serial number, which identifies the bicycle; each first / second parking point is provided with an RFID reader 30, which energizes the passive RFID unit when the bicycle is arranged in the parking position so as to read the identification serial number of the bicycle. The electronic unit 20 receives the serial number and by accessing an own database recognizes the type of parked bicycle (adult/children).

## Claims

1. Station (1) for managing a fleet of bicycles (5) **characterised in that** it comprises:
- a first rack unit (7) provided with a plurality of first parking points (7a), each of which is configured to support a respective first bicycle (5a) having a size that is compatible for an adult user; each first parking point (7a) being associated with first reversible connecting means (16) to provide a mechanical connection between a portion (18) of said first bicycle (7a) and the first rack unit (7) when the first bicycle (5a) is arranged in a stable parking position; each first parking point (7a) being provided with first sensor means to identify the presence / absence of a bicycle arranged in the stable parking position;
- a second rack unit (9) provided with a plurality of second parking points (9a), each of which is configured to support a respective second bicycle (5g) having a size smaller than the first bicycle (5a) and compatible for a child user; each second parking point (9a) being associated with second reversible connecting means (16) to provide a mechanical connection between a portion (18) of said second bicycle and the second rack unit (9) when the second bicycle is arranged in a stable parking position; each second parking point (9a) being provided with second sensor means to identify the presence / absence of a bicycle arranged in the stable parking position;
electronic control means (20) to receive an order for the withdrawal of a bicycle from an authorised user; said electronic control means (20) being adapted to enable the release of first reversible connecting means (16) to allow the withdrawal of a first adult bicycle from the first rack unit (7) and a subsequent release of at least second reversible connecting means (16) to allow the withdrawal of at least a second children's bicycle from the second rack unit (9).

2. Station according to claim 1, wherein said electronic control means (20) cooperate with said first sensor means to detect the positioning of a second bicycle arranged in a first parking point by carrying out the following operations:
sending a locking order to the connecting means (16) of the first parking point (7a) where the children's bicycle (5g) has been parked, thus preventing a subsequent withdrawal of the bicycle (5g) that has been incorrectly parked;
providing a user message, e.g. by means of an SMS notification or a web notification, to inform the user of the incorrect parking of the children's bicycle (5g);
notifying the error to a remote operating centre.

3. Station according to claim 1 or 2, wherein said electronic control means (20) cooperate with said second sensor means to detect the positioning of a first bicycle arranged in a second parking point by carrying out the following operations:
sending a locking order to the connecting means (16) of the second parking point (9a) where the adult's bicycle (5a) has been parked, thus preventing a subsequent withdrawal of the bicycle (5a) that has been incorrectly parked;
providing a user message, e.g. by means of an SMS notification or a web notification, to inform the user of the incorrect parking of the adult bicycle (5a);
notifying the error to a remote operating centre.

4. Station according to any one of the preceding claims, wherein the first rack unit (7) comprises a first horizontal bar (11) supported by end elements (12) and vertically spaced by a first distance with respect to a parking plane; said first parking points (7a) being spaced along said first horizontal bar (11) to allow the parking of first bicycles frontally connected to said bar and substantially parallel to each other;
the second rack unit (9) comprises a second horizontal bar (13) supported by end elements (14) and vertically spaced by a second distance, shorter than the first, with respect to a parking plane; said second parking points (9a) being spaced along said second horizontal bar (13) to allow the parking of second bicycles frontally connected to said bar and substantially parallel to each other.

5. Station according to any one of the preceding claims, wherein each parking point (7a, 9b) comprises a pair of holes (17) made in said bar; each bicycle has a front portion provided with a pair of teeth (18) fitting into respective holes when the bicycle is arranged in said parking position and is fastened to the bar; said reversible connecting means (16) being adapted to lock said teeth into the respective holes when the bicycle is arranged in a stable parking position.

6. Station according to any one of the preceding claims, wherein each bicycle is provided with a passive RFID unit storing a serial number which identifies the bicycle; each first / second parking point is provided with an RFID reader which is configured to feed energy to the passive RFID unit when the bicycle is arranged in the parking position so as to read the identification serial number of the bicycle; said electronic control means allow accessing an own database to associate a type of bicycle (adult/children) with the read identification serial number.
